# EUROPEAN PATENT SPECIFICATION

(11) **EP 3 340 421 B1**
(45) Date of publication and mention of the grant of the patent: **16.10.2019**
(21) Application number: 16838752.0
(22) Date of filing: 27.07.2016
(51) Int. Cl.: H02J 7/00, H01M 10/48

(54) **POWER STORAGE CONTROL DEVICE, POWER CONVERSION DEVICE, POWER STORAGE SYSTEM, POWER STORAGE CONTROL METHOD, AND PROGRAM**
ENERGIESPEICHERSTEUERUNGSVORRICHTUNG, ENERGIEUMWANDLUNGSVORRICHTUNG, ENERGIESPEICHERSYSTEM, ENERGIESPEICHERSTEUERUNGSVERFAHREN UND PROGRAMM
DISPOSITIF DE COMMANDE DE STOCKAGE D'ÉLECTRICITÉ, DISPOSITIF DE CONVERSION DE COURANT, SYSTÈME DE STOCKAGE D'ÉLECTRICITÉ, PROCÉDÉ DE COMMANDE DE STOCKAGE D'ÉLECTRICITÉ, ET PROGRAMME

(30) Priority: 21.08.2015 JP 2015164259
(43) Date of publication of application: 27.06.2018
(73) Proprietor: Panasonic Intellectual Property Management Co., Ltd., Osaka-shi, Osaka 540-6207 (JP)
(72) Inventor: YOSHIMATSU, Takahiro, Osaka-shi, Osaka 540-6207 (JP); YOSITAKE, Akira, Osaka-shi, Osaka 540-6207 (JP); TERAMOTO, Yuichiro, Osaka-shi, Osaka 540-6207 (JP)
(74) Representative: Appelt, Christian W.
(86) International application number: PCT/JP2016/003470
(87) International publication number: WO 2017/033400

(56) References cited:
- WO-A1-2012/049955
- WO-A1-2012/131864
- WO-A1-2015/059873
- WO-A1-2015/059873

## Description

### Technical Field

The present invention generally relates to power storage control devices, power conversion devices, power storage systems, power storage control methods, and programs.

### Background Art

The discharge voltage characteristic curve of a nickel-based storage battery steeply attenuates just before the capacity of its cells goes 0 V. In view of this consideration, a discharge stopping method for preventing a storage battery from being overly discharged by stopping discharging the storage battery at a point in time when the attenuation rate of discharge voltage starts to increase significantly has been proposed (see, for example, Patent Literature 1).

Various techniques for preventing over-discharging a storage battery, such as the one disclosed in Patent Literature 1 mentioned above, have been proposed so far.

When nearing depletion, however, a storage battery could be deteriorated due to charging and discharging, which would sometimes bring not only discharging but also charging to a halt. When that happens, such a storage battery that has already been prohibited from being charged and discharged is usually replaced with a new storage battery which has been charged to a sufficient capacity. Nevertheless, it is troublesome and far from being cost-efficient to replace such a deteriorated storage battery with a new one.

### Citation List

### Patent Literature

Patent Literature 1: JP H7-302620 A

### Summary of Invention

It is therefore an object of the present invention to provide a power storage control device, power conversion device, power storage system, power storage control method, and program contributing to not only slowing down the deterioration of a storage battery by normally stopping charging and discharging the storage battery when the storage battery is close to depletion but also reducing the frequency of replacing the storage battery.

A power storage control device according to an aspect of the present invention is designed to control operation of a power converter configured to charge and discharge a storage battery. The power storage control device includes: a controller configured to control the operation of the power converter in a control mode selected from a plurality of control modes; and a mode changer configured to change the control mode of the controller. The plurality of control modes of the controller include: a first mode in which the controller allows the storage battery to be charged and discharged if a remaining capacity of the storage battery is equal to or greater than a threshold value and prohibits the storage battery from being charged and discharged if the remaining capacity of the storage battery is less than the threshold value; and a second mode in which the controller allows the storage battery to start being charged with electricity if the remaining capacity of the storage battery is less than the threshold value. The mode changer allows the control mode to be changed into the second mode in a situation where the controller prohibits the storage battery from being charged and discharged while controlling the operation of the power converter in the first mode.

A power conversion device according to another aspect of the present invention includes: the power storage control device described above; and a power converter configured to charge and discharge the storage battery.

A power storage system according to still another aspect of the present invention includes: the power storage control device described above; a storage battery; and a power converter configured to charge and discharge the storage battery.

A power storage control method according to yet another aspect of the present invention is designed to control operation of a power converter configured to charge and discharge a storage battery. The power storage control method includes controlling the operation of the power converter in a control mode selected from a plurality of control modes. The plurality of control modes include: a first mode in which the storage battery is allowed to be charged and discharged if a remaining capacity of the storage battery is equal to or greater than a threshold value and is prohibited from being charged and discharged if the remaining capacity of the storage battery is less than the threshold value; and a second mode in which the storage battery is allowed to start being charged with electricity if the remaining capacity of the storage battery is less than the threshold value. The power storage control method further includes allowing the control mode to be changed into the second mode in a situation where the storage battery is prohibited from being charged and discharged while the operation of the power converter is being controlled in the first mode.

A program according to yet another aspect of the present invention is designed to make a computer perform a power storage control method. The power storage control method includes controlling, in a control mode selected from a plurality of control modes, operation of a power converter configured to charge and discharge a storage battery. The plurality of control modes include: a first mode in which the storage battery is allowed to be charged and discharged if a remaining capacity of the storage battery is equal to or greater than a threshold value and is prohibited from being charged and discharged if the remaining capacity of the storage battery is less than the threshold value; and a second mode in which the storage battery is allowed to start being charged with electricity if the remaining capacity of the storage battery is less than the threshold value. The power storage control method further includes allowing the control mode to be changed into the second mode in a situation where the storage battery is prohibited from being charged and discharged while the operation of the power converter is being controlled in the first mode.

### Brief Description of Drawings

FIG. 1 is a block diagram illustrating a configuration for a power storage system including a power storage control device according to an embodiment;
FIG. 2 illustrates conceptually how operation in a first mode is performed according to the embodiment;
FIG. 3 is a flowchart showing how operation in the first mode is performed according to the embodiment;
FIG. 4 is a flowchart showing how a mode change operation is performed according to the embodiment;
FIG. 5 illustrates conceptually how operation in a second mode is performed according to the embodiment; and
FIG. 6 is a flowchart showing how operation in the second mode is performed according to the embodiment.

### Description of Embodiment

An embodiment will now be described with reference to the accompanying drawings. The following embodiment relates to a power storage control device, power conversion device, power storage system, power storage control method, and program for controlling the operation of a power converter configured to charge and discharge a storage battery.

### (Embodiment)

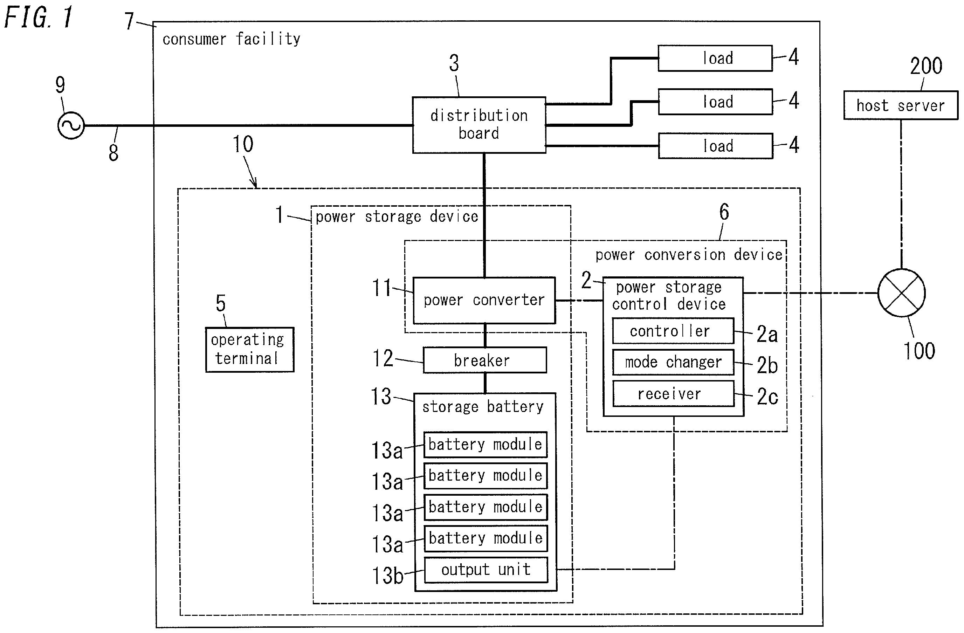

FIG. 1 illustrates an overall configuration for a distribution system. The distribution system includes, as major components, a power storage device 1, a power storage control device 2, and a distribution board 3, and supplies power to loads 4. In the embodiment to be described below, the distribution system is applied to a single-family house as an exemplary consumer facility 7. Alternatively, the distribution system is naturally applicable to any other type of consumer facility such as a multi-family dwelling house or a business facility. In FIG. 1, the solid line between each pair of components indicates a power transmission path, and the one-dot chain between each pair of components indicates a signal transmission path.

First of all, the distribution system uses, as power supplies for supplying electric power to the loads 4, a utility power supply 9 and the power storage device 1, both of which are electrically connected to the distribution board 3.

The distribution board 3 is supplied with not only AC power (utility power) from the utility power supply 9 via a power grid 8 but also AC power (discharge power) from the power storage device 1 as well. The distribution board 3 includes a trunk breaker, a plurality of branch breakers, a switch, and other components, which are all built in the board, and supplies the AC power to the loads 4 via multiple systems of branch circuits, which are provided for the load-side terminals of the plurality of branch breakers. Note that the loads 4 shown in FIG. 1 may be electric devices such as a lighting fixture, an air conditioner, and an information device, which are all connected to the branch circuits.

The power storage device 1 includes a power converter 11, a breaker 12, and a storage battery 13.

The breaker 12 is provided between the power converter 11 and the storage battery 13. Turning the breaker 12 ON (i.e., electrically conductive) electrically connects the power converter 11 to the storage battery 13. Turning the breaker 12 OFF (i.e., electrically cut off) electrically cuts off the power converter 11 from the storage battery 13.

In FIG. 1, the breaker 12 is arranged between the power converter 11 and the storage battery 13. Alternatively, the breaker 12 may also be configured to form part of the power converter 11 or form part of the storage battery 13, for example.

The storage battery 13 is connected to the distribution board 3 via the breaker 12 and the power converter 11. The power converter 11 has the function of charging and discharging the storage battery 13. More specifically, the power converter 11 converts the AC power supplied from the distribution board 3 into DC power and charges the storage battery 13 with the DC power. In addition, the power converter 11 converts the DC power supplied from the storage battery 13 into AC power and supplies the AC power to the distribution board 3, thereby discharging electricity from the storage battery 13. Furthermore, the power converter 11 has the function of regulating the frequency and output voltage of the AC power to be output (i.e., discharge power) so that the power storage device 1 can be interconnected with the power grid 8.

Moreover, the power converter 11 also has the function of regularly generating first voltage data based on a measured battery voltage of the storage battery 13 being input to the power converter 11 and regularly outputting the first voltage data to the power storage control device 2.

The storage battery 13 may be a lithium-ion battery, for example, and includes a plurality of battery modules 13a and an output unit 13b. The storage battery 13 is formed by connecting, in parallel with each other, a plurality of strings, in each of which those battery modules 13a are connected together in series.

The output unit 13b is configured to be communicable with the power storage control device 2. The output unit 13b also has the function of regularly generating second voltage data based on the measured battery voltage of the storage battery 13 and regularly outputting the second voltage data to the power storage control device 2. In the storage battery 13, the voltage is measured for each string in which a plurality of battery modules 13a are connected together in series. The output unit 13b outputs, as the second voltage data, the highest one of the respective voltage values of those strings. Alternatively, the output unit 13b may also output, as the second voltage data, the average of the respective voltage values of those strings. Still alternatively, the output unit 13b may also output, as the second voltage data, the lowest one of the respective voltage values of those strings.

Optionally, the storage battery 13 may also be configured as a parallel connection of a plurality of battery modules 13a. In that case, the voltage between the terminals of the battery modules 13a may be used as the second voltage data.

That is to say, the first voltage data is data about the battery voltage measured in the power converter 11. Also, the second voltage data is data about the battery voltage measured in the storage battery 13. In general, the second voltage data tends to be closer to the true battery voltage of the storage battery 13 than the first voltage data is. Depending on the intended use of the data, either the first voltage data or the second voltage data is used selectively.

Then, the discharge power of the power storage device 1 (more particularly, the discharge power of the storage battery 13) is used as either the overall power to be consumed by the loads 4 (hereinafter referred to as "total demand power," which is the sum of the powers consumed by the respective loads 4) or the power to flow back toward the power grid 8 (hereinafter referred to as "reverse power").

That is to say, this distribution system is configured to perform a power storage operation of charging the storage battery 13 with the utility power and a reverse power flow operation of making the discharge power of the power storage device 1 flow back toward the power grid 8.

The power storage control device 2 does not have to be configured as a single device in the consumer facility 7 but may also be configured as a plurality of devices in the consumer facility 7, as a server on a network, or as a cloud computing system, for example. Also, although the power storage control device 2 is provided separately from the power storage device 1 in FIG. 1, the power storage device 1 and the power storage control device 2 may form integral parts of a single device, or the power storage device 1, the power storage control device 2, and an operating terminal 5 may form integral parts of a single device. Alternatively, the power storage control device 2 and the power converter 11 may form a power conversion device 6. In that case, the storage battery 13 and the power conversion device 6 may be provided separately from each other.

The power storage control device 2 includes a controller 2a, a mode changer 2b, and a receiver 2c. Note that the power storage control device 2 includes a built-in computer and the functions of the respective components of the power storage control device 2 described above (among other things, the controller 2a and the mode changer 2b) are performed by making the computer execute a program. The computer includes, as major components, a device with a processor executing a program, an interface device for exchanging data with other devices, and a storage device for storing data. The device with a processor may be any one of a central processing unit (CPU) or microprocessing unit (MPU) provided separately from a semiconductor memory, or a microcomputer including a semiconductor memory as an integral component. As the storage device, a storage device with a short access time such as a semiconductor memory and a storage device with large storage capacity such as a hard disk drive may be used in combination.

The program may be provided by either having been pre-stored on some storage medium such as a computer-readable read-only memory (ROM) or an optical disc or being downloaded onto a storage medium over a broadband communications network such as the Internet.

The power storage control device 2 controls charging and discharging the storage battery 13 by the power converter 11. That is to say, by controlling charging and discharging the storage battery 13 by the power converter 11, the power storage control device 2 allows for regulating the utility power received by the consumer facility 7 from the power grid 8 and the reverse power to flow back from the consumer facility 7 toward the power grid 8.

Specifically, the controller 2a has the function of controlling the operation of the power converter 11 in a control mode selected from a plurality of control modes. The storage device described above stores a program for executing algorithms respectively corresponding to the plurality of control modes. By executing one of those algorithms associated with the control mode that has been set, the controller 2a is allowed to control the operation of the power converter 11 in the control mode thus set. Note that the controller 2a may perform automatic control of charging and discharging the storage battery 13 based on an increase or decrease in the power consumption of the loads 4, the energy charge rate that varies depending on the time of the day, the current time, or any other parameter and manual control of charging and discharging the storage battery 13 in response to an operation signal received from the operating terminal 5 or any other device.

The power storage control device 2 is further connected to the broadband network 100 such as the Internet via a smart meter installed as a remote power meter in the consumer facility 7 or any other network device such as a router or a home gateway. The controller 2a is also able to communicate with a host server 200 on the broadband network 100. The host server 200 is managed by a utility power company or aggregator, which makes the host server 200 transmit various types of requests, information, and other data toward the consumer facility 7 based on the supply-demand balance of the utility power supplied from the power grid 8.

In this case, a service using a demand response for a power peak cut purpose is proposed by a power company or an aggregator. The demand response may be used in the following manner. Specifically, when it is predicted that the electricity demand will be close to the electricity supply regarding the utility power, consumers are requested in advance, with a demand response signal, to cut down the use of the utility power during a power consumption reduction period. The demand response signal will be hereinafter referred to as a "DR signal." The DR signal includes various kinds of information about the specified period, the electric energy to be reduced, and other parameters. As used herein, the specified period refers to a period during which the utility power used (i.e., the utility power supplied from the utility power supply 9 to the loads 4) is to be reduced in response to a power reduction request.

Then, on receiving the DR signal, the controller 2a may perform discharge control (automatic control) on the storage battery 13 according to the electric energy to be reduced that has been requested for a specified period requested by the DR signal.

The mode changer 2b changes the control mode of the controller 2a. The controller 2a has, as control modes, a first mode and a second mode. The first mode is a control mode in which the storage battery 13 is allowed to be charged and discharged if a remaining capacity of the storage battery 13 is equal to or greater than a threshold value and is prohibited from being charged and discharged if the remaining capacity of the storage battery 13 is less than the threshold value. The second mode is a control mode in which the storage battery 13 is allowed to start being charged with electricity if the remaining capacity of the storage battery 13 is less than the threshold value.

The receiver 2c has the function of acquiring (receiving) the first voltage data from the power converter 11, and also has the function of acquiring (receiving) second voltage data from the output unit 13b of the storage battery 13.

In general, the remaining capacity (charged capacity) of the storage battery 13 may be estimated by the battery voltage of the storage battery 13. Thus, the controller 2a is allowed to determine the remaining capacity of the storage battery 13 based on the battery voltage of the storage battery 13. That is to say, the controller 2a is allowed to perform power storage control on a control mode basis in accordance with the remaining capacity of the storage battery 13.

An operating terminal 5 is further provided in the consumer facility 7. The operating terminal 5 may be any of various types of dedicated terminals, personal computers, and other devices, and includes an interface accepting a human user's input and output operations and a screen to display various kinds of information thereon. The operating terminal 5 may also be any of smartphones, cellphones, and various other kinds of mobile telecommunications devices portable for a human user. The operating terminal 5 also has the ability to remotely control and monitor the power storage control device 2 by communicating with the power storage control device 2. The communication between the operating terminal 5 and the power storage control device 2 may be established either directly or indirectly via a router installed in the consumer facility 7. Optionally, the operating terminal 5 may form an integral part of the power storage device 1.

Note that the power storage device 1 (including the power converter 11 and the storage battery 13), the power storage control device 2, and the operating terminal 5 together form a power storage system 10 according to this embodiment.

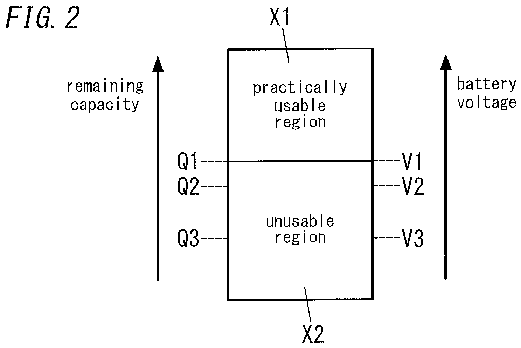

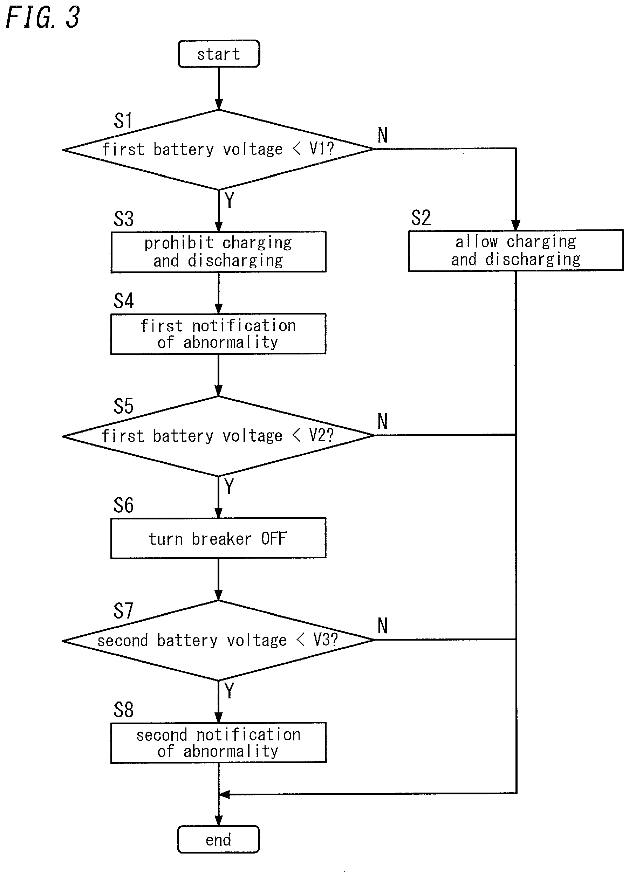

Next, it will be described, with reference to the conceptual diagram illustrated in FIG. 2 and the flowchart illustrated in FIG. 3, how the controller 2a operating in the first mode controls the power converter 11.

The control mode of the controller 2a is normally supposed to be the first mode. The controller 2a operating in the first mode compares a battery voltage based on the latest first voltage data (hereinafter referred to as a "first battery voltage") with threshold values V1, V2 and also compares a battery voltage based on the latest second voltage data (hereinafter referred to as a "second battery voltage") with another threshold value V3. In other words, the controller 2a uses the first battery voltage as the battery voltage to be compared with the threshold values V1, V2 and also uses the second battery voltage as the battery voltage to be compared with the threshold value V3. Note that these threshold values V1, V2, and V3 satisfy the inequality V1 > V2 > V3.

In the first mode, the remaining capacity of the storage battery 13 is divisible into a practically usable region X1 and an unusable region X2 as shown in the conceptual diagram of FIG. 2. The practically usable region X1 is a region in which the remaining capacity of the storage battery 13 becomes equal to or greater than the threshold value Q1 (first threshold level), and corresponds to a region in which the battery voltage becomes equal to or greater than the threshold value V1. The unusable region X2 is a region in which the remaining capacity of the storage battery 13 becomes less than the threshold value Q1, and corresponds to a region in which the battery voltage becomes less than the threshold value V1. Also, the controller 2a sets the two threshold values V2, V3 for the battery voltage in the unusable region X2. The threshold value V2 corresponds to the threshold value Q2 with respect to the remaining capacity of the storage battery 13, and the threshold value V3 corresponds to the threshold value Q3 (second threshold level) with respect to the remaining capacity of the storage battery 13. Note that these threshold values Q1, Q2, and Q3 satisfy the inequality Q1 > Q2 > Q3.

The practically usable region X1 represents a range of capacities of the storage battery 13 which are normally usable for users (such as family members or employees) at the consumer facility 7. In the practically usable region X1, the storage battery 13 deteriorates due to charging and discharging less significantly than in the unusable region X2. The unusable region X2 represents a range of capacities of the storage battery 13 which are unusable for those users at the consumer facility 7. In the unusable region X2, the storage battery 13 deteriorates due to charging and discharging more significantly than in the practically usable region X1. Particularly in a range where the battery voltage is less than V3, the storage battery 13 deteriorates so greatly due to charging and discharging that charging and discharging of the storage battery 13 is strictly prohibited.

Then, the controller 2a operating in the first mode compares the first battery voltage with the threshold value V1, thereby determining whether or not the remaining capacity of the storage battery 13 falls within the practically usable region X1 (in S1). If the first battery voltage is equal to or greater than the threshold value V1, then the controller 2a determines that the remaining capacity of the storage battery 13 falls within the practically usable region X1 and allows the storage battery 13 to be charged and discharged (in S2). That is to say, if the first battery voltage is equal to or greater than the threshold value V1, the controller 2a may perform both of charge control and discharge control on the storage battery 13 either automatically or manually.

On the other hand, if the first battery voltage is less than the threshold value V1, then the controller 2a operating in the first mode determines that the remaining capacity of the storage battery 13 falls within the unusable region X2 and prohibits the storage battery 13 from being charged and discharged (in S3). That is to say, if the first battery voltage is less than the threshold value V1, the controller 2a may not perform either charge control or discharge control on the storage battery 13.

Also, if the first battery voltage is less than the threshold value V1, the controller 2a transmits a first notification of abnormality, instructing that the charging and discharging be stopped, to the operating terminal 5 (in S4). On receiving the first notification of abnormality, the operating terminal 5 displays a screen, notifying the user that charging and discharging are to be stopped, and sounds an audio alarm if necessary.

The controller 2a sets two more threshold values V2, V3 for the unusable region X2. After the first battery voltage has decreased to less than the threshold value V1, the controller 2a compares the first battery voltage with the threshold value V2 (in S5). When the first battery voltage further decreases to less than the threshold value V2, the controller 2a transmits a cutoff signal to the breaker 12 (in S6). In response to the cutoff signal received, the breaker 12 turns OFF (i.e., goes cut off) by disconnecting contact points from each other. That is to say, the controller 2a cuts off the discharge path via the breaker 12 and curbs a further decrease in the remaining capacity of the storage battery 13 by turning the breaker 12 OFF compulsorily.

Nevertheless, there is a possibility that even after the breaker 12 has turned OFF, the remaining capacity of the storage battery 13 will gradually decrease due to self-discharge. When the battery voltage of the storage battery 13 decreases to less than the threshold value V3, the storage battery 13 will start to deteriorate greatly due to charging and discharging. That is why the use of the storage battery 13 is strictly prohibited (i.e., charging and discharging thereof is strictly prohibited) once the battery voltage thereof has decreased to less than the threshold value V3. Thus, after the first battery voltage has decreased to less than the threshold value V2, the controller 2a compares the second battery voltage, which is closer to the true battery voltage than the first battery voltage is, with the threshold value V3 (in S7). When the second battery voltage further decreases to less than the threshold value V3, the controller 2a transmits a second notification of abnormality, notifying the user that the use of the storage battery 13 be strictly prohibited, to the operating terminal 5 (in S8). On receiving the second notification of abnormality, the operating terminal 5 displays a screen, notifying the user that the use of the storage battery 13 is strictly prohibited, and sounds an audio alarm if necessary. Also, if the first battery voltage turns out to be equal to or greater than the threshold value V2 in Step S5 or if the second battery voltage turns out to be equal to or greater than the threshold value V3 in Step S7, then the controller 2a ends this process.

The controller 2a operating in the first mode performs the process shown in FIG. 3 repeatedly, thereby performing discharge control based on the remaining capacity of the storage battery 13.

Therefore, in the first mode, allowing the storage battery 13 to be charged and discharged only in the practically usable region X1 in which the storage battery 13 deteriorates less significantly contributes to extending the life of the storage battery 13. In addition, this also promotes safety because the user is selectively notified of abnormality, and the breaker 12 is selectively turned OFF, according to the degree of decrease in battery voltage.

However, once the first battery voltage thereof has decreased to less than the threshold value V1 (i.e., once its remaining capacity has decreased to reach the unusable region X2), the storage battery 13 is no longer chargeable or dischargeable in the first mode. In such a situation, in the known art, a worker who is knowledgeable and skillful enough to maintain the power storage device 1 replaces a nearly depleted storage battery 13 with a fully charged storage battery. Thus, such replacement work is troublesome and is far from being cost-efficient.

To overcome this problem, according to this embodiment, the mode changer 2b changes the control mode of the controller 2a into the second mode and allows the storage battery 13 to be charged with electricity, thus reducing the frequency of replacing the storage battery 13.

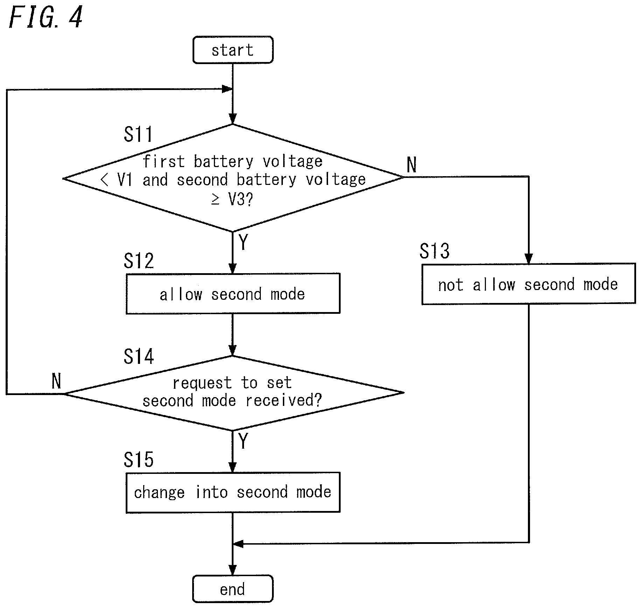

FIG. 4 is a flowchart showing the procedure of changing the control mode from the first mode into the second mode. First, in a situation where the controller 2a is operating in the first mode, the mode changer 2b determines whether or not the first battery voltage is less than the threshold value V1 and whether or not the second battery voltage is equal to or greater than the threshold value V3 (in S11). Only when the first battery voltage is less than the threshold value V1 and the second battery voltage is equal to or greater than the threshold value V3, the mode changer 2b allows the control mode to be changed from the first mode into the second mode (in S12). That is to say, in a situation where the controller 2a prohibits the storage battery 13 from being charged and discharged by controlling the operation of the power converter 11 in the first mode, the mode changer 2b allows the control mode to be changed into the second mode if the remaining capacity of the storage battery 13 is less than the threshold value Q1 and equal to or greater than the threshold value Q3. Meanwhile, if the first battery voltage is equal to or greater than the threshold value V1 or if the second battery voltage is less than the threshold value V3, then the mode changer 2b does not allow the control mode to be changed from the first mode into the second mode (in S13).

If the mode changer 2b allows the control mode to be changed from the first mode into the second mode, the mode changer 2b determines whether or not a request to set the second mode (i.e., a signal instructing that the mode be changed into the second mode) has been received from the operating terminal 5 (in S14). Specifically, the operating terminal 5 is operated by a worker to transmit the request to set the second mode. It is recommended that the request to set the second mode be allowed to be transmitted by making the operating terminal 5 perform authentication processing on the worker. That is to say, the processing of changing the control mode from the first mode into the second mode is suitably performed only by a worker who is knowledgeable and skillful enough to maintain the power storage device 1 properly.

When receiving the request to set the second mode while allowing the control mode to be changed into the second mode, the mode changer 2b changes the control mode of the controller 2a into the second mode (in S15). If the mode changer 2b continues to receive no request to set the second mode for a certain period of time while allowing the mode to be changed into the second mode, the process goes back to the processing step S11.

Therefore, only when the battery voltage of the storage battery 13 has decreased to fall within the range in which the battery voltage is less than the threshold value V1 and equal to or greater than the threshold value V3, the mode changer 2b may change the control mode of the controller 2a from the first mode into the second mode. That is to say, in a normal state where the battery voltage of the storage battery 13 (i.e., the first battery voltage) is equal to or greater than the threshold value V1, the mode changer 2b may not change the control mode of the controller 2a from the first mode into the second mode, thus preventing the control mode from switching into the second mode unnecessarily. Likewise, in an abnormal state where the battery voltage of the storage battery 13 (i.e., the second battery voltage) is less than the threshold value V3, the mode changer 2b may not change the control mode of the controller 2a from the first mode into the second mode, either.

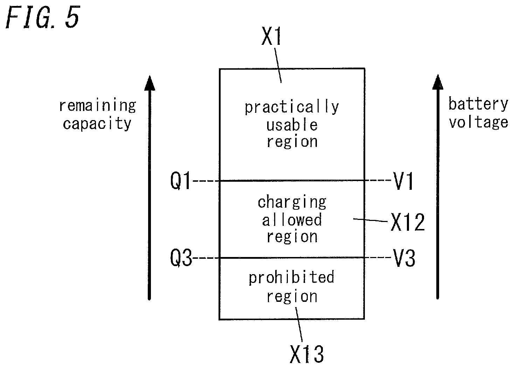

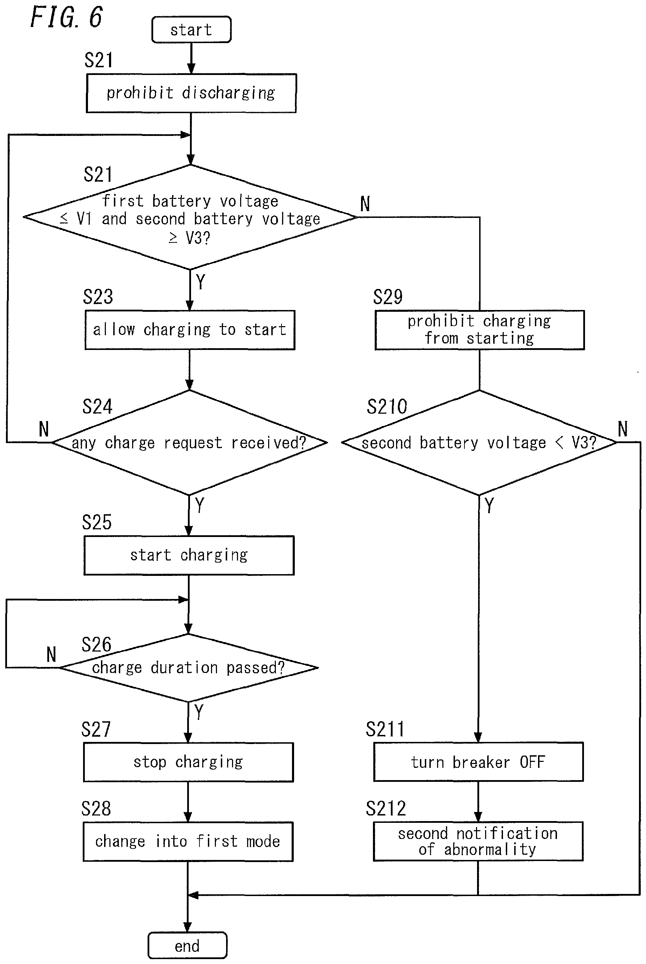

Next, it will be described, with reference to the conceptual diagram illustrated in FIG. 5 and the flowchart illustrated in FIG. 6, how the controller 2a operating in the second mode controls the power converter 11.

In the second mode, the remaining capacity of the storage battery 13 is divisible into a practically usable region X1, a charging allowed region X12, and a prohibited region X13 as shown in the conceptual diagram of FIG. 5. The practically usable region X1 is a region in which the remaining capacity of the storage battery 13 becomes equal to or greater than the threshold value Q1 (first threshold level) as described above and corresponds to a region in which the battery voltage becomes equal to or greater than the threshold value V1. The charging allowed region X12 is a region in which the remaining capacity of the storage battery 13 becomes equal to or greater than the threshold value Q3 (second threshold level) and less than the threshold value Q1 and corresponds to a region in which the battery voltage becomes less than the threshold value V1 and equal to or greater than the threshold value V3. The prohibited region X13 is a region in which the remaining capacity of the storage battery 13 becomes less than the threshold value Q3 and corresponds to a region in which the battery voltage becomes less than the threshold value V3.

The practically usable region X1 represents a range of capacities of the storage battery 13 which are normally usable for users at the consumer facility 7. In the practically usable region X1, the storage battery 13 deteriorates only insignificantly due to charging and discharging. The charging allowed region X12 represents a range of capacities of the storage battery 13 which are unusable for those users at the consumer facility 7. In the charging allowed region X12, the storage battery 13 deteriorates due to charging and discharging more significantly than in the practically usable region X1, but the degree of the deterioration is a negligible one, as long as charging or discharging is performed for a short time. In the prohibited region X13, the storage battery 13 deteriorates so greatly due to charging and discharging that charging and discharging of the storage battery 13 is strictly prohibited.

First, the worker turns the breaker 12 ON. The controller 2a operating in the second mode prohibits the storage battery 13 from being discharged (in S21). Next, the controller 2a determines whether or not the first battery voltage is less than the threshold value V1 and whether or not the second battery voltage is equal to or greater than the threshold value V3 (i.e., whether or not the remaining capacity of the storage battery 13 falls within the charging allowed region X12) (in S22). In this case, as shown in the flowchart of FIG. 4, when the control mode is changed into the second mode, the first battery voltage would be less than the threshold value V1 and the second battery voltage would be equal to or greater than the threshold value V3. Only when the first battery voltage is less than the threshold value V1 and the second battery voltage is equal to or greater than the threshold value V3, the controller 2a allows the storage battery to start being charged with electricity (in S23). After having allowed the storage battery to start being charged, the controller 2a determines whether or not a charge request, instructing that charging be started, has been received from the operating terminal 5 (in S24). Specifically, the operating terminal 5 is operated by a worker to transmit the charge request. It is recommended that the charge request be allowed to be transmitted by making the operating terminal 5 perform authentication processing on the worker. That is to say, the charge instruction in the second mode is suitably issued only by a worker who is knowledgeable and skillful enough to maintain the power storage device 1 properly.

On receiving the charge request, the controller 2a instructs the power converter 11 to start charging the storage battery 13 with electricity (in S25). The controller 2a instructs the power converter 11 to continue charging the storage battery 13 with electricity until a predetermined amount of charge duration passes since the start of charging (in S26). This charge duration has been set in advance to be a certain amount of time that is long enough to increase the remaining capacity of the storage battery 13 to the practically usable region X1. Thereafter, at a point in time when the charge duration passes since the start of charging the storage battery 13 with electricity, the controller 2a instructs the power converter 11 to stop charging the storage battery 13 with electricity (in S27). After the power converter 11 has stopped charging the storage battery 13 with electricity, the mode changer 2b changes the control mode of the controller 2a into the first mode (in S28). That is to say, after a predetermined amount of time has passed since the start of charging the storage battery 13 with electricity, the mode changer 2b is allowed to change the control mode from the second mode into the first mode.

Optionally, the controller 2a may vary the charge duration appropriately according to the remaining capacity (battery voltage) of the storage battery 13. For example, the smaller the remaining capacity is, the longer the charge duration set by the controller 2a may be. Stated otherwise, the larger the remaining capacity is, the shorter the charge duration set by the controller 2a may be.

Alternatively, at a point in time when the remaining capacity of the storage battery 13 being charged in the second mode increases to reach a target value in the practically usable region X1, the controller 2a may have charging stopped. After that, the mode changer 2b may change the control mode from the second mode into the first mode.

Furthermore, if the first battery voltage is equal to or greater than the threshold value V1 or the second battery voltage is less than the threshold value V3 in Step S22, then the controller 2a prohibits the storage battery 13 from starting being charged (in S29).

Moreover, there is a possibility that if there are no charge requests after the control mode has been changed into the second mode, the remaining capacity of the storage battery 13 will gradually decrease due to self-discharge. When the battery voltage of the storage battery 13 decreases to less than the threshold value V3, the storage battery 13 will start to deteriorate greatly due to charging and discharging. That is why the use of the storage battery 13 is strictly prohibited (i.e., charging and discharging thereof is strictly prohibited) once the battery voltage thereof has decreased to less than the threshold value V3.

When the second battery voltage decreases to less than the threshold value V3 (in S210), the controller 2a transmits a cutoff signal to the breaker 12 (in S211). In response to the cutoff signal received, the breaker 12 turns OFF (i.e., goes cut off) by disconnecting contact points from each other. That is to say, the controller 2a cuts off the discharge path via the breaker 12 and curbs a further decrease in the remaining capacity of the storage battery 13 by turning the breaker 12 OFF compulsorily. Meanwhile, if the second battery voltage turns out to be equal to or greater than the threshold value V3 in Step S210, then the controller 2a ends this process.

Also, if the second battery voltage has decreased to less than the threshold value V3, the controller 2a transmits a second notification of abnormality, instructing that the use of the storage battery 13 be strictly prohibited, to the operating terminal 5 (in S212). On receiving the second notification of abnormality, the operating terminal 5 displays a screen, notifying the user that the use of the storage battery 13 is strictly prohibited, and sounds an audio alarm if necessary.

Thus, the controller 2a operating in the second mode may have charging the storage battery 13 started in the charging allowed region X12, thus allowing the remaining capacity of the storage battery 13 to be recovered and reach the practically usable region X1 and reducing the frequency of replacing the storage battery 13.

Also, the process step of changing the control mode into the second mode and the processing step of starting charging the storage battery 13 with electricity in the second mode are suitably performed by an experienced worker with expertise. In that case, the processing of charging the storage battery 13 with electricity in the second mode will not be performed unnecessarily by the user.

In addition, the processing step of charging the storage battery 13 with electricity in the second mode ends automatically, and then the control mode of the controller 2a automatically changes from the second mode back to the first mode. This substantially eliminates the possibility of the user's forgetting to change the control mode from the second mode into the first mode, thus slowing down the deterioration of the storage battery 13 due to the constant operation of the controller 2a in the second mode.

Also, if power reduction is requested by a DR signal while the controller 2a operating in the second mode is performing charge control on the storage battery 13, the controller 2a does not perform discharge control on the storage battery 13 in accordance with the DR signal. That is to say, the controller 2a suitably gives higher priority to the charge control for the storage battery 13 in the second mode rather than the discharge control for the storage battery 13 responsive to the DR signal. In that case, even if power reduction is requested by the DR signal, deterioration of the storage battery 13 is still reducible.

Alternatively, the controller 2a may give higher priority to the discharge control for the storage battery 13 responsive to the DR signal rather than the charge control for the storage battery 13 in the second mode. Such an alternative embodiment contributes to stabilizing the power grid in a situation where the power reduction request is a highly urgent one.

In the embodiments described above, a voltage measuring method based on a battery voltage is used as a method for measuring the remaining capacity of the storage battery 13. However, the method for measuring the remaining capacity of the storage battery 13 does not have to be such a voltage measuring method. Examples of alternative methods for measuring the remaining capacity of the storage battery 13 include a coulomb counter method based on a current flowing into a battery and a current flowing out of the battery, a modeling method taking characteristics (such as a temperature characteristic and discharge characteristic) of the battery to use into account, and an impedance track method based on the impedance of a battery cell.

As can be seen from the foregoing description, a power storage control device 2 according to a first aspect of the exemplary embodiment described above is designed to control operation of a power converter 11 configured to charge and discharge a storage battery 13. The power storage control device 2 includes a controller 2a and a mode changer 2b. The controller 2a is configured to control the operation of the power converter 11 in a control mode selected from a plurality of control modes. The mode changer 2b is configured to change the control mode of the controller 2a. The plurality of control modes of the controller 2a include a first mode and a second mode. The first mode is a control mode in which the controller 2a allows the storage battery 13 to be charged and discharged if a remaining capacity of the storage battery 13 is equal to or greater than a threshold value Q1 and prohibits the storage battery 13 from being charged and discharged if the remaining capacity of the storage battery 13 is less than the threshold value Q1. The second mode is a control mode in which the controller 2a allows the storage battery 13 to start being charged with electricity if the remaining capacity of the storage battery 13 is less than the threshold value Q1. In a situation where the controller 2a prohibits the storage battery 13 from being charged and discharged while controlling the operation of the power converter 11 in the first mode, the mode changer 2b allows the control mode to be changed into the second mode.

Thus, in this power storage control device 2, the controller 2a normally operates in the first mode, and in a situation where the controller 2a prohibits the storage battery 13 from being charged and discharged while controlling the operation of the power converter 11 in the first mode, the mode changer 2b allows the control mode to be changed into the second mode. That is to say, this power storage control device 2 allows for slowing down the deterioration of the storage battery 13 by normally stopping charging and discharging the storage battery 13 when the storage battery 13 is nearing depletion, and charging the nearly depleted storage battery 13 with electricity depending on the necessity, thus reducing the frequency of replacing the storage battery 13.

In a power storage control device 2 according to a second aspect of the exemplary embodiment, which is dependent on the first aspect, the first mode may be a control mode in which the storage battery 13 is allowed to be charged and discharged if the remaining capacity of the storage battery 13 is equal to or greater than a threshold value Q1 (first threshold level) and is prohibited from being charged and discharged if the remaining capacity of the storage battery 13 is less than the threshold value Q1. The second mode may be a control mode in which the storage battery 13 is allowed to start being charged with electricity if the remaining capacity of the storage battery 13 is less than the threshold value Q1 and equal to or greater than a threshold value Q3 (second threshold level) that is lower than the threshold value Q1, and is prohibited from starting being charged with electricity if the remaining capacity of the storage battery 13 is less than the threshold value Q3.

Therefore, in the second mode, if the remaining capacity of the storage battery 13 is less than the threshold value Q3, charging the storage battery 13 with electricity will not be allowed, thus further slowing down the deterioration of the storage battery 13.

In a power storage control device 2 according to a third aspect of the exemplary embodiment, which is dependent on the second aspect, in the situation where the controller 2a prohibits the storage battery 13 from being charged and discharged while controlling the operation of the power converter 11 in the first mode, the mode changer 2b may allow the control mode to be changed into the second mode, if the remaining capacity of the storage battery 13 is less than the threshold value Q1 and equal to or greater than the threshold value Q3.

Therefore, in a normal state where the remaining capacity of the storage battery 13 is equal to or greater than the threshold value Q1 and in an abnormal state where the remaining capacity of the storage battery 13 is less than the threshold value Q3, the mode changer 2b is not allowed to change the control mode of the controller 2a from the first mode into the second mode. This prevents the control mode from switching into the second mode unnecessarily and slows down the deterioration of the storage battery 13 as well.

In a power storage control device 2 according to a fourth aspect of the exemplary embodiment, which is dependent on any one of the first to third aspects, in a situation where the controller 2a is controlling the operation of the power converter 11 in the second mode, the mode changer 2b may change the control mode into the first mode after the storage battery 13 has been charged with electricity.

Thus, the control mode of the controller 2a automatically switches from the second mode back to the first mode after the storage battery has been charged with electricity. This substantially eliminates the possibility of forgetting to change the control mode from the second mode into the first mode, thus slowing down the deterioration of the storage battery 13 due to the constant operation of the controller 2a in the second mode.

In a power storage control device 2 according to a fifth aspect of the exemplary embodiment, which is dependent on the fourth aspect, in a situation where the controller 2a is controlling the operation of the power converter 11 in the second mode, the mode changer 2b may change the control mode into the first mode after a predetermined amount of time has passed since the start of charging the storage battery 13 with electricity.

This allows the controller 2a to automatically switch its control mode from the second mode back into the first mode after some remaining capacity has been ensured for the storage battery 13.

In a power storage control device 2 according to a sixth aspect of the exemplary embodiment, which is dependent on any one of the first to fifth aspects, the mode changer 2b may change the control mode of the controller 2a from the first mode into the second mode on receiving a request to set the second mode while allowing the control mode to be changed into the second mode.

Thus, the control mode is changed from the first mode into the second mode when a setting request is issued by human operation, for example, and therefore, the control mode does not switch into the second mode unnecessarily.

In addition, in the power storage control device 2, while the controller 2a is controlling the operation of the power converter 11 in the second mode, the mode changer 2b may stop charging the storage battery 13 with electricity at a point in time when the remaining capacity of the storage battery 13 increases to reach a target value that is equal to or greater than the threshold value Q1, and then change the control mode from the second mode into the first mode.

Thus, after the remaining capacity of the storage battery 13 has been increased to the threshold value Q1 or more, the control mode of the controller 2a is automatically switchable from the second mode back into the first mode.

A power conversion device 6 according to a seventh aspect of the exemplary embodiment includes: the power storage control device 2 of any one of the first to sixth aspects; and a power converter 11 configured to charge and discharge the storage battery 13.

Thus, this power conversion device 6 allows for slowing down the deterioration of a storage battery 13 by normally stopping charging and discharging the storage battery 13 when the storage battery 13 is close to depletion, and reducing the frequency of replacing the storage battery 13.

A power storage system 10 according to an eighth aspect of the exemplary embodiment includes: the power storage control device 2 of any one of the first to sixth aspects; a storage battery 13; and a power converter 11 configured to charge and discharge the storage battery 13.

Thus, this power storage system 10 allows for slowing down the deterioration of a storage battery 13 by normally stopping charging and discharging the storage battery 13 when the storage battery 13 is close to depletion, and reducing the frequency of replacing the storage battery 13.

A power storage control method according to a ninth aspect of the exemplary embodiment is designed to control operation of a power converter 11 configured to charge and discharge a storage battery 13. This power storage control method includes controlling the operation of the power converter 11 in a control mode selected from a plurality of control modes. This power storage control method has, as the plurality of control modes, a first mode and a second mode. The first mode is a control mode in which the storage battery 13 is allowed to be charged and discharged if a remaining capacity of the storage battery 13 is equal to or greater than a threshold value Q1 and is prohibited from being charged and discharged if the remaining capacity of the storage battery 13 is less than the threshold value Q1. The second mode is a control mode in which the storage battery 13 is allowed to start being charged with electricity if the remaining capacity of the storage battery 13 is less than the threshold value Q1. This power storage control method further includes allowing the control mode to be changed into the second mode in a situation where the storage battery 13 is prohibited from being charged and discharged while the operation of the power converter 11 is being controlled in the first mode.

Thus, this power storage control method allows for slowing down the deterioration of a storage battery 13 by normally stopping charging and discharging the storage battery 13 when the storage battery 13 is close to depletion, and reducing the frequency of replacing the storage battery 13.

A computer-executable program according to a tenth aspect of the exemplary embodiment is designed to make a computer perform a power storage control method. The power storage control method includes controlling, in a control mode selected from a plurality of control modes, operation of a power converter 11 configured to charge and discharge a storage battery 13. This program has, as the plurality of control modes, a first mode and a second mode. The first mode is a control mode in which the storage battery 13 is allowed to be charged and discharged if a remaining capacity of the storage battery 13 is equal to or greater than a threshold value Q1 and is prohibited from being charged and discharged if the remaining capacity of the storage battery 13 is less than the threshold value Q1. The second mode is a control mode in which the storage battery 13 is allowed to start being charged with electricity if the remaining capacity of the storage battery 13 is less than the threshold value Q1. The power storage control method further includes allowing the control mode to be changed into the second mode in a situation where the storage battery 13 is prohibited from being charged and discharged while the operation of the power converter 11 is being controlled in the first mode.

Thus, this program allows for slowing down the deterioration of a storage battery 13 by normally stopping charging and discharging the storage battery 13 when the storage battery 13 is close to depletion, and reducing the frequency of replacing the storage battery 13.

Although the present invention has been described with reference to exemplary embodiments, those embodiments should not be construed as limiting but numerous modifications or variations can be readily made by those skilled in the art depending on their design choice or any other factor without departing from the scope of the invention as defined by the appended claims.

For example, the distribution system may include a distributed power supply such as a solar power generator or a wind power generator, and may use the power generated by the distributed power supply to charge the storage battery 13 or to drive the loads 4.

Optionally, the controller 2a may have three or more control modes including the first mode and the second mode described above.

### Reference Signs List

- 1: Power Storage Device
- 11: Power Converter
- 12: Breaker
- 13: Storage Battery
- 13a: Battery Module
- 2: Power Storage Control Device
- 2a: Controller
- 2b: Mode Changer
- 2c: Receiver
- 3: Distribution Board
- 4: Load
- 5: Operating Terminal
- 6: Power Conversion Device
- 8: Power Grid
- 9: Utility Power Supply
- 10: Power Storage System
- 100: Broadband Network
- 200: Host Server

## Claims

1. A power storage control device for controlling operation of a power converter configured to charge and discharge a storage battery, the power storage control device comprising:
a controller configured to control the operation of the power converter in a control mode selected from a plurality of control modes; and
a mode changer configured to change the control mode of the controller,
the plurality of control modes of the controller including: a first mode in which the controller allows the storage battery to be charged and discharged if a remaining capacity of the storage battery is equal to or greater than a threshold value and prohibits the storage battery from being charged and discharged if the remaining capacity of the storage battery is less than the threshold value; and a second mode in which the controller allows the storage battery to start being charged with electricity if the remaining capacity of the storage battery is less than the threshold value, **characterized by**
the mode changer allowing the control mode to be changed into the second mode in a situation where the controller prohibits the storage battery from being charged and discharged while controlling the operation of the power converter in the first mode.

2. The power storage control device of claim 1, wherein
the first mode is a control mode in which the storage battery is allowed to be charged and discharged if the remaining capacity of the storage battery is equal to or greater than a first threshold level as an exemplary level of the threshold value and is prohibited from being charged and discharged if the remaining capacity of the storage battery is less than the first threshold level, and
the second mode is a control mode in which the storage battery is allowed to start being charged with electricity if the remaining capacity of the storage battery is less than the first threshold level and equal to or greater than a second threshold level that is lower than the first threshold level, and is prohibited from starting being charged with electricity if the remaining capacity of the storage battery is less than the second threshold level.

3. The power storage control device of claim 2, wherein
in the situation where the controller prohibits the storage battery from being charged and discharged while controlling the operation of the power converter in the first mode, the mode changer allows the control mode to be changed into the second mode, if the remaining capacity of the storage battery is less than the first threshold level and equal to or greater than the second threshold level.

4. The power storage control device of any one of claims 1 to 3, wherein
in a situation where the controller is controlling the operation of the power converter in the second mode, the mode changer changes the control mode into the first mode after the storage battery has been charged with electricity.

5. The power storage control device of claim 4, wherein
in a situation where the controller is controlling the operation of the power converter in the second mode, the mode changer changes the control mode into the first mode after a predetermined amount of time has passed since start of charging the storage battery with electricity.

6. The power storage control device of any one of claims 1 to 5, wherein
the mode changer changes the control mode of the controller from the first mode into the second mode on receiving a request to set the second mode while allowing the control mode to be changed into the second mode.

7. A power conversion device comprising:
the power storage control device of any one of claims 1 to 6; and
a power converter configured to charge and discharge the storage battery.

8. A power storage system comprising:
the power storage control device of any one of claims 1 to 6;
a storage battery; and
a power converter configured to charge and discharge the storage battery.

9. A power storage control method for controlling operation of a power converter configured to charge and discharge a storage battery, the power storage control method comprising
controlling the operation of the power converter in a control mode selected from a plurality of control modes,
the plurality of control modes including: a first mode in which the storage battery is allowed to be charged and discharged if a remaining capacity of the storage battery is equal to or greater than a threshold value and is prohibited from being charged and discharged if the remaining capacity of the storage battery is less than the threshold value; and a second mode in which the storage battery is allowed to start being charged with electricity if the remaining capacity of the storage battery is less than the threshold value,
the power storage control method being **characterized by** allowing the control mode to be changed into the second mode in a situation where the storage battery is prohibited from being charged and discharged while the operation of the power converter is being controlled in the first mode.

10. A program designed to make a computer perform a power storage control method, the power storage control method comprising
controlling, in a control mode selected from a plurality of control modes, operation of a power converter configured to charge and discharge a storage battery, according to the method of claim 9.

## Patentansprüche

1. Energiespeichersteuerungsvorrichtung zum Steuern des Betriebs eines Energiewandlers, der zum Laden und Entladen einer Speicherbatterie konfiguriert ist, wobei die Energiespeichersteuerungsvorrichtung umfasst:
eine Steuerung, die konfiguriert ist, um den Betrieb des Energiewandlers in einem Steuermodus, der aus mehreren Steuermodi ausgewählt wird, zu steuern; und
einen Moduswechsler, der konfiguriert ist, um den Steuermodus der Steuerung zu wechseln,
wobei die mehreren Steuermodi der Steuerung umfassen: einen ersten Modus, in dem die Steuerung das Laden und Entladen der Speicherbatterie erlaubt, wenn eine verbleibende Kapazität der Speicherbatterie gleich oder größer als ein Schwellenwert ist, und das Laden und Entladen der Speicherbatterie verhindert, wenn die verbleibende Kapazität der Speicherbatterie kleiner als der Schwellenwert ist; und einen zweiten Modus, in dem die Steuerung ein Laden der Speicherbatterie mit Strom erlaubt, wenn die verbleibende Kapazität der Speicherbatterie kleiner als der Schwellenwert ist;
**dadurch gekennzeichnet, dass**
der Moduswechsler einen Wechsel des Steuermodus in den zweiten Modus erlaubt, wenn die Steuerung das Laden und Entladen der Speicherbatterie verhindert, während sie den Betrieb des Energiewandlers in dem ersten Modus steuert.

2. Energiespeichersteuerungsvorrichtung nach Anspruch 1, wobei der erste Modus ein Steuermodus ist, in dem das Laden und Entladen der Speicherbatterie erlaubt wird, wenn die verbleibende Kapazität der Speicherbatterie gleich oder größer als ein erster Schwellenpegel als exemplarischer Pegel des Schwellenwerts ist, und das Laden und Entladen verhindert wird, wenn die verbleibende Kapazität der Speicherbatterie kleiner als der erste Schwellenpegel ist, und
der zweite Modus ein Steuermodus ist, in dem ein Beginn des Ladens der Speicherbatterie mit Strom erlaubt wird, wenn die verbleibende Kapazität der Speicherbatterie kleiner als der erste Schwellenpegel und gleich oder größer als ein zweiter Schwellenpegel ist, der kleiner als der erste Schwellenpegel ist, und der Beginn des Ladens von Strom verhindert wird, wenn die verbleibende Kapazität der Speicherbatterie kleiner als der zweite Schwellenpegel ist.

3. Energiespeichersteuerungsvorrichtung nach Anspruch 2, wobei
in der Situation, in der die Steuerung das Laden und Entladen der Speicherbatterie verhindert, während sie den Betrieb des Energiewandlers in dem ersten Modus steuert, der Moduswechsler ein Wechseln des Steuermodus in den zweiten Modus erlaubt, wenn die verbleibende Kapazität der Speicherbatterie kleiner als der erste Schwellenpegel und gleich oder größer als der zweite Schwellenpegel ist.

4. Energiespeichersteuerungsvorrichtung nach einem der Ansprüche 1 bis 3, wobei
in einer Situation, in der die Steuerung den Betrieb des Energiewandlers in dem zweiten Modus steuert, der Moduswechsler den Steuermodus in den ersten Modus wechselt, nachdem die Speicherbatterie mit Strom geladen wurde.

5. Energiespeichersteuerungsvorrichtung nach Anspruch 4, wobei
in einer Situation, in der die Steuerung den Betrieb des Energiewandlers in dem zweiten Modus steuert, der Moduswechsler den Steuermodus in den ersten Modus wechselt, nachdem eine vorbestimmte Zeitspanne seit dem Beginn des Ladens der Speicherbatterie mit Strom vergangen ist.

6. Energiespeichersteuerungsvorrichtung nach einem der Ansprüche 1 bis 5, wobei
der Moduswechsler bei Empfang einer Aufforderung zum Einstellen des zweiten Modus, während ein Wechsel des Steuermodus in den zweiten Modus erlaubt wird, den Steuermodus der Steuerung von dem ersten Modus in den zweiten Modus wechselt.

7. Energieumwandlungsvorrichtung, umfassend:
die Energiespeichersteuerungsvorrichtung nach einem der Ansprüche 1 bis 6; und
einen Energiewandler, der konfiguriert ist, um die Speicherbatterie zu laden und zu entladen.

8. Energiespeichersystem, umfassend:
die Energiespeichersteuerungsvorrichtung nach einem der Ansprüche 1 bis 6;
eine Speicherbatterie; und
einen Energiewandler, der konfiguriert ist, um die Speicherbatterie zu laden und zu entladen.

9. Energiespeichersteuerungsverfahren zum Steuern des Betriebs eines Energiewandlers, der zum Laden und Entladen einer Speicherbatterie konfiguriert ist, wobei das Energiespeichersteuerungsverfahren umfasst:
Steuern des Betriebs des Energiewandlers in einem Steuermodus, der aus mehreren Steuermodi ausgewählt ist,
wobei die mehreren Steuermodi umfassen: einen ersten Modus, in dem das Laden und Entladen der Speicherbatterie erlaubt wird, wenn eine verbleibende Kapazität der Speicherbatterie gleich oder größer als ein Schwellenwert ist, und das Laden und Entladen verhindert wird, wenn die verbleibende Kapazität der Speicherbatterie kleiner als der Schwellenwert ist; und einen zweiten Modus, in dem ein Beginn des Ladens der Speicherbatterie mit Strom erlaubt wird, wenn die verbleibende Kapazität der Speicherbatterie kleiner als der Schwellenwert ist,
wobei das Energiespeichersteuerungsverfahren **dadurch gekennzeichnet ist, dass**
ein Wechseln des Steuermodus in den zweiten Modus erlaubt wird, in einer Situation, in der das Laden und Entladen der Speicherbatterie verhindert wird, während der Betrieb des Energiewandlers in dem ersten Modus gesteuert wird.

10. Programm, das dafür eingerichtet ist, einen Computer zu veranlassen, ein Energiespeichersteuerungsverfahren durchzuführen, wobei das Energiespeichersteuerungsverfahren umfasst:
Steuern des Betriebs eines Energiewandlers, der zum Laden und Entladen einer Speicherbatterie konfiguriert ist, in einem Steuermodus, der aus mehreren Steuermodi ausgewählt wird, gemäß dem Verfahren nach Anspruch 9.

## Revendications

1. Dispositif de commande de stockage d'énergie pour commander le fonctionnement d'un convertisseur de puissance configuré pour charger et décharger une batterie de stockage, le dispositif de commande de stockage d'énergie comprenant :
un dispositif de commande configuré pour commander le fonctionnement du convertisseur de puissance dans un mode de commande choisi parmi une pluralité de modes de commande ; et
un dispositif de changement de mode configuré pour changer le mode de commande du dispositif de commande,
la pluralité de modes de commande du dispositif de commande comprenant : un premier mode dans lequel le dispositif de commande permet que la batterie de stockage soit chargée et déchargée si une capacité restante de la batterie de stockage est égale ou supérieure à une valeur de seuil et empêche la batterie de stockage d'être chargée et déchargée si la capacité restante de la batterie de stockage est inférieure à la valeur de seuil ; et un deuxième mode dans lequel le dispositif de commande permet que la batterie de stockage commence à être chargée avec de l'électricité si la capacité restante de la batterie de stockage est inférieure à la valeur de seuil,
**caractérisé en ce que**
le dispositif de changement de mode permet que le mode de commande soit changé dans le deuxième mode dans une situation dans laquelle le dispositif de commande empêche la batterie de stockage d'être chargée et déchargée tout en commandant le fonctionnement du convertisseur de puissance dans le premier mode.

2. Dispositif de commande de stockage d'énergie selon la revendication 1, dans lequel
le premier mode est un mode de commande dans lequel la batterie de stockage est autorisée à être chargée et déchargée si la capacité restante de la batterie de stockage est égale ou supérieure à un premier niveau de seuil en tant qu'exemple de niveau de la valeur de seuil et est empêchée d'être chargée et déchargée si la capacité restante de la batterie de stockage est inférieure au premier niveau de seuil, et
le deuxième mode est un mode de commande dans lequel la batterie de stockage est autorisée à commencer à être chargée avec de l'électricité si la capacité restante de la batterie de stockage est inférieure au premier niveau de seuil et égale ou supérieure à un deuxième niveau de seuil qui est inférieur au premier niveau de seuil, et est empêchée de commencer à être chargée avec de l'électricité si la capacité restante de la batterie de stockage est inférieure au deuxième niveau de seuil.

3. Dispositif de commande de stockage d'énergie selon la revendication 2, dans lequel
dans la situation dans laquelle le dispositif de commande empêche la batterie de stockage d'être chargée et déchargée tout en commandant le fonctionnement du convertisseur de puissance dans le premier mode, le dispositif de changement de mode permet que le mode de commande soit changé dans le deuxième mode, si la capacité restante de la batterie de stockage est inférieure au premier niveau de seuil et égale ou supérieure au deuxième niveau de seuil.

4. Dispositif de commande de stockage d'énergie selon l'une quelconque des revendications 1 à 3, dans lequel
dans une situation dans laquelle le dispositif de commande commande le fonctionnement du convertisseur de puissance dans le deuxième mode, le dispositif de changement de mode change le mode de commande dans le premier mode après que la batterie de stockage ait été chargée avec de l'électricité.

5. Dispositif de commande de stockage d'énergie selon la revendication 4, dans lequel
dans une situation dans laquelle le dispositif de commande commande le fonctionnement du convertisseur de puissance dans le deuxième mode, le dispositif de changement de mode change le mode de commande dans le premier mode après qu'un temps prédéterminé se soit écoulé depuis le début de la charge de la batterie de stockage avec de l'électricité.

6. Dispositif de commande de stockage d'énergie selon l'une quelconque des revendications 1 à 5, dans lequel
le dispositif de changement de mode change le mode de commande du dispositif de commande du premier mode dans le deuxième mode lors de la réception d'une demande pour définir le deuxième mode tout en permettant que le mode de commande soit changé dans le deuxième mode.

7. Dispositif de conversion d'énergie comprenant :
le dispositif de commande de stockage d'énergie selon l'une quelconque des revendications 1 à 6 ; et
un convertisseur de puissance configuré pour charger et décharger la batterie de stockage.

8. Système de stockage d'énergie comprenant :
le dispositif de commande de stockage d'énergie selon l'une quelconque des revendications 1 à 6 ;
une batterie de stockage ; et
un convertisseur de puissance configuré pour charger et décharger la batterie de stockage.

9. Procédé de commande de stockage d'énergie pour commander le fonctionnement d'un convertisseur de puissance configuré pour charger et décharger une batterie de stockage, le procédé de commande de stockage d'énergie comprenant
la commande du fonctionnement du convertisseur de puissance dans un mode de commande choisi parmi une pluralité de modes de commande,
la pluralité de modes de commande comprenant : un premier mode dans lequel la batterie de stockage est autorisée à être chargée et déchargée si une capacité restante de la batterie de stockage est égale ou supérieure à une valeur de seuil et est empêchée d'être chargée et déchargée si la capacité restante de la batterie de stockage est inférieure à la valeur de seuil ; et un deuxième mode dans lequel la batterie de stockage est autorisée à commencer à être chargée avec de l'électricité si la capacité restante de la batterie de stockage est inférieure à la valeur de seuil,
le procédé de commande de stockage d'énergie étant **caractérisé par**
l'autorisation du mode de commande à être basculé dans le deuxième mode dans une situation dans laquelle la batterie de stockage est empêchée d'être chargée et déchargée tandis que le fonctionnement du convertisseur de puissance est commandé dans le premier mode.

10. Programme conçu pour amener un ordinateur à exécuter un procédé de commande de stockage d'énergie, le procédé de commande de stockage d'énergie comprenant
la commande, dans un mode de commande choisi parmi une pluralité de modes de commande, du fonctionnement d'un convertisseur de puissance configuré pour charger et décharger une batterie de stockage selon le procédé de la revendication 9.
